# FASCICULE DE BREVET EUROPEEN

(11) **EP 3 522 065 B1**
(45) Date de publication et mention de la délivrance du brevet: **28.12.2022**
(21) Numéro de dépôt: 19155254.6
(22) Date de dépôt: 04.02.2019
(51) Int. Cl.: G06K 7/08

(54) **LECTEUR DE PISTE MAGNÉTIQUE, PROCÉDÉ DE DÉTERMINATION DE LA VITESSE DE DÉFILEMENT DE LA PISTE, PROCÉDÉ DE RECONNAISSANCE DE DONNÉES ENREGISTRÉES SUR LA PISTE ET DISPOSITIFS CORRESPONDANTS**
MAGNETSTREIFENLESER, BESTIMMUNGSVERFAHREN DER LAUFGESCHWINDIGKEIT DER SPUR, VERFAHREN ZUM ERKENNEN DER AUF DER SPUR GESPEICHERTEN DATEN, UND ENTSPRECHENDE VORRICHTUNGEN
MAGNETIC STRIP READER, METHOD FOR DETERMINING THE STRIP SCANNING SPEED, METHOD FOR RECOGNISING DATA RECORDED ON THE STRIP AND CORRESPONDING DEVICES

(30) Priorité: 06.02.2018 FR 1850976
(43) Date de publication de la demande: 07.08.2019
(73) Titulaire: Banks and Acquirers International Holding, 75015 Paris (FR)
(72) Inventeur: CARABELLI, Andre, 07130 SAINT-PERAY (FR)
(74) Mandataire: Vidon Brevets & Stratégie

(56) Documents cités:
- EP-A2- 0 053 655
- CN-A- 103 576 101
- GB-A- 2 015 794
- JP-A- 2015 200 551

## Description

### 1 DOMAINE TECHNIQUE

Le domaine de l'invention est celui des lecteurs de pistes magnétiques.

L'invention se rapporte plus particulièrement à un tel lecteur et à des procédés associés permettant de s'affranchir des contraintes ergonomiques liées à la cinématique de passage de la piste magnétique le long du lecteur lors de la lecture de la piste en question.

L'invention a de nombreuses applications, notamment mais non exclusivement dans le domaine des terminaux de paiement électronique configurés pour lire des cartes de paiement magnétiques, mais aussi dans le domaine des lecteurs de titres de transports (e.g. lecteurs de tickets de bus ou de métro), le domaine des lecteurs de carte d'accès à un bâtiment, etc.

### 2 ARRIERE-PLAN TECHNOLOGIQUE

Les pistes magnétiques sont traditionnellement lues en utilisant un capteur sensible aux variations du flux du champ magnétique le traversant, i.e. à dΦ/dt, avec Φ=H^{∗}S, S la surface sensible du capteur et H la composante du champ magnétique orthogonale à la surface en question. Un tel capteur connu est constitué d'un circuit magnétique excitant une bobine. Le flux est capté par un entrefer sur lequel doit être plaquée la piste magnétique à lire. La bobine peut être considérée comme un générateur électrique sensible aux variations du flux magnétique. Ainsi, le défilement de la piste magnétique devant l'entrefer induit les variations de flux dans le circuit magnétique.

La demande de brevet GB2015794A décrit par exemple un système reproduisant un signal binaire, enregistré sur un support magnétique, à des vitesses différentes

La demande de brevet CN103576101A décrit un capteur magnétique multi-canal.

Cependant, de tels lecteurs connus présentent plusieurs inconvénients.

Plus particulièrement, afin de pouvoir mettre en correspondance les variations du signal temporel issu d'un tel capteur avec la disposition spatiale des informations enregistrées le long de la piste magnétique, cette dernière doit être déplacée avec une vitesse suffisamment constante devant le capteur en question. Par ailleurs, une vitesse de déplacement minimum est requise afin d'obtenir des variations de champs suffisantes pour être traitées correctement par l'électronique embarquée.

Il est ainsi nécessaire que l'utilisateur fasse preuve de dextérité pour faire défiler de façon suffisamment régulière la piste magnétique dans le lecteur. Il est par exemple impossible de lire la piste si l'utilisateur s'arrête ou revient en arrière dans son mouvement.

Par ailleurs, la mécanique qui permet de plaquer et guider la tête de lecture comprenant le capteur sur la piste magnétique ne doit pas générer d'à-coups (micro translation, oscillations, etc.) susceptibles d'induire des variations locales de la vitesse de passage. Ceci conduit à des contraintes de fabrication supplémentaires pour les lecteurs de piste magnétique.

Il existe ainsi un besoin pour une solution de lecture de pistes magnétiques permettant de s'affranchir des contraintes ergonomiques liées à la cinématique de passage de la piste magnétique le long du lecteur.

### 3 RESUME

Dans un mode de réalisation de l'invention, il est proposé un système de lecture selon la revendication 1.

Ainsi, l'invention propose une solution nouvelle et inventive pour un lecteur de piste magnétique permettant de s'affranchir des contraintes ergonomiques liées à la cinématique de passage de la piste magnétique dans le lecteur.

Pour ce faire, il est proposé d'utiliser au moins deux capteurs sensibles au flux du champ magnétique les traversant en lieu et place d'un seul capteur sensible à la dérivée du flux en question comme dans les lecteurs connus.

La vitesse de défilement de la piste peut ainsi être aisément déterminée, et les données enregistrées sur la piste en question reconnues, via la mise en œuvre des procédés correspondants décrits ci-dessous. Cet effet est obtenu quelle que soit la cinématique de la piste lors de sa lecture, par exemple lorsque la piste change de sens de défilement pendant la lecture, ou en présence d'arrêts et de redémarrages du défilement, ou même en cas de défilement à une vitesse très lente, etc.

Dans un mode de réalisation, les premier et deuxième capteurs appartiennent au groupe comprenant :
- un capteur TMR (pour « Tunneling Magnetic Résistance » en anglais) ; et
- un capteur GMR (pour « Giant Magnetic Résistance » en anglais).

Ainsi, l'implémentation du lecteur de piste se base sur l'utilisation de capteurs du marché, conduisant à une solution simple, robuste et économique.

Dans un mode de réalisation, les premier et deuxième capteurs sont intégrés sur une même puce silicium.

Ainsi, les dispersions entre les caractéristiques (statiques ou déviantes, par exemple en température) des premier et deuxième capteurs se trouvent maitrisées et minimisées (par exemple leurs niveaux de sensibilité au champ magnétique). De la sorte, il est possible de s'affranchir de phases de calibrage des capteurs et de compensation des dispersions en question, réduisant par là-même le coût de la solution globale.

Par ailleurs, la distance d séparant les capteurs est particulièrement maitrisée, améliorant par là-même les résultats obtenus lors de la mise en œuvre des procédés selon l'invention décrits ci-dessous.

Dans un autre mode de réalisation de l'invention, il est proposé un procédé de détermination de la vitesse instantanée de défilement d'une piste magnétique lue par un système de lecture de piste magnétique selon l'invention (selon l'un quelconque des modes de réalisation décrit ci-dessus). Un tel procédé de détermination de la vitesse instantanée comprend une étape de détermination de la vitesse instantanée de défilement de la piste magnétique à partir des premier et deuxième signaux temporels et de la distance prédéterminée entre les premier et deuxième capteurs.

Ainsi, l'invention concerne également un procédé de détermination de la vitesse instantanée de défilement d'une piste magnétique lue par un système de lecture tel que décrit précédemment (selon l'un quelconque des modes de réalisation précités).

De la sorte, la nature des signaux délivrés par les capteurs du lecteur (capteurs sensibles au flux du champ magnétique les traversant) permet la mise en œuvre de traitements conduisant à la détermination de la vitesse instantanée en question de manière améliorée, i.e. quelle que soit la cinématique de la piste lors de sa lecture.

Une telle vitesse instantanée déterminée de manière améliorée permet par exemple de mettre en œuvre une reconnaissance améliorée de données enregistrées sur la piste comme décrit ci-dessous.

Dans un mode de réalisation, l'étape de détermination de la vitesse instantanée de défilement comprend :
- un échantillonnage des premier et deuxième signaux temporels délivrant respectivement des première et deuxième séquences temporelles d'échantillons, et, pour au moins un échantillon de la première séquence temporelle d'échantillons, dit échantillon courant :
- une détermination d'un échantillon correspondant de la deuxième séquence temporelle d'échantillons, maximisant un critère prédéterminé de correspondance avec l'échantillon courant ; et
- une obtention d'une distance temporelle séparant l'échantillon courant et l'échantillon correspondant.

La vitesse instantanée de défilement est déterminée en fonction de la distance temporelle séparant l'échantillon courant et l'échantillon correspondant et de la distance d prédéterminée. La vitesse instantanée de défilement est associée à l'échantillon courant et à l'échantillon correspondant.

Ainsi, la vitesse instantanée de défilement de la piste est déterminée de manière simple et robuste par exemple via le ratio entre la distance d prédéterminée et la distance temporelle séparant l'échantillon courant et l'échantillon correspondant.

Dans un mode de réalisation, l'étape de détermination de l'échantillon correspondant comprend une corrélation entre les première et deuxième séquences temporelles d'échantillons, délivrant une fonction de corrélation. Un indice temporel de l'échantillon correspondant est fonction d'un indice d'un maximum de la fonction de corrélation. L'étape d'obtention de la distance temporelle comprend un calcul d'une différence entre les indices temporels de l'échantillon courant et de l'échantillon correspondant.

Ainsi, la distance temporelle entre échantillons correspondants des première et deuxième séquences est déterminée de manière simple et robuste.

Dans un mode de réalisation, un signe de la différence entre les indices temporels de l'échantillon courant et de l'échantillon correspondant est représentatif d'un sens de défilement de la piste par rapport au lecteur au moment de la capture de l'échantillon courant par le premier capteur.

Dans un mode de réalisation, l'étape de détermination de l'échantillon correspondant comprend un calcul itératif d'une pluralité d'aires fonction d'une différence entre :
- une première somme, sur une fenêtre temporelle comprenant l'échantillon courant, de premiers échantillons de la première séquence temporelle d'échantillons ; et
- une deuxième somme, sur la fenêtre temporelle, de deuxièmes échantillons de la deuxième séquence temporelle d'échantillons décalée d'un offset temporel variable mis à jour à chaque itération du calcul.

Un indice temporel de l'échantillon correspondant est fonction d'une valeur de l'offset temporel correspondant à une aire minimale parmi la pluralité d'aires. L'étape d'obtention de la distance temporelle comprend un calcul d'une différence entre les indices temporels de l'échantillon courant et de l'échantillon correspondant.

Ainsi, la distance temporelle entre échantillons correspondants des première et deuxième séquences est déterminée de manière simple et robuste.

Dans un mode de réalisation, le signe d'une aire correspondant à une valeur nulle de l'offset temporel parmi la pluralité d'aires est représentatif d'un sens de défilement de la piste par rapport au lecteur au moment de la capture de l'échantillon courant par le premier capteur.

L'invention concerne également un procédé de reconnaissance d'au moins une donnée enregistrée sur une piste magnétique lue par un système de lecture tel que décrit précédemment (selon l'un quelconque des modes de réalisation précités). Un tel procédé comprend les étapes suivantes :
- détermination de la vitesse instantanée de défilement de la piste par mise en œuvre du procédé de détermination de la vitesse instantanée décrit ci-dessus (selon l'un quelconque de ses modes de réalisation) ; et
- reconnaissance de ladite au moins une donnée à partir de la vitesse instantanée de défilement et d'au moins une des première et deuxième séquences temporelles d'échantillons.

Plus particulièrement, un tel procédé de reconnaissance utilise la vitesse instantanée de défilement de la piste déterminée par le procédé de détermination décrit précédemment (selon l'un quelconque de ses modes de réalisation).

De la sorte, les traitements appliqués aux signaux délivrés par les capteurs du lecteur (capteurs sensibles au flux du champ magnétique les traversant) permettent la reconnaissance des données en question quelle que soit la cinématique de la piste lors de sa lecture (e.g. même lorsque la piste change de sens de défilement pendant la lecture, ou en présence d'arrêts et de redémarrages du défilement, ou même en cas de défilement à une vitesse très lente, etc.).

Dans un mode de réalisation, l'étape de reconnaissance comprend une normalisation d'au moins une des première et deuxième séquences temporelles d'échantillons à partir des vitesses associées aux échantillons des séquences. La normalisation délivre au moins une séquence d'échantillons virtuels représentatifs d'une disposition spatiale d'éléments magnétiques représentant l'au moins une donnée sur la piste. L'au moins une donnée est reconnue à partir de l'au moins une séquence d'échantillons virtuels.

Dans un mode de réalisation, les éléments magnétiques correspondent à une pluralité de bâtonnets magnétiques disposés dans un sens transverse au sens de défilement de la piste lors de la lecture. Les bâtonnets magnétiques se succèdent le long de la piste avec des polarités magnétiques en alternance d'un bâtonnet au suivant. L'au moins une donnée est représentée via une largeur d'au moins un bâtonnet magnétique correspondant. L'étape de reconnaissance comprend une détermination de l'au moins une largeur. L'au moins une donnée est reconnue à partir de l'au moins une largeur.

Ainsi, la reconnaissance de données telles qu'encodées par exemple sur la piste magnétique d'une carte de paiement se fait de manière simple et robuste.

Dans un mode de réalisation, l'étape de détermination de l'au moins une largeur met en œuvre une méthode d'estimation de frontières de l'au moins un bâtonnet magnétique correspondant appartenant au groupe comprenant :
- un calcul d'une fonction dérivée de l'au moins une séquence d'échantillons virtuels, les frontières correspondant à des zéros ou à des extrema de la fonction dérivée ; et
- un calcul d'une différence entre les première et deuxième séquences d'échantillons virtuels, les frontières correspondant à des zéros ou à des extrema de la différence, lorsque l'étape de normalisation appliquée aux première et deuxième séquences temporelles d'échantillons délivre des première et deuxième séquences d'échantillons virtuels correspondantes.

Ainsi, lorsque les premier et deuxième capteurs sont implémentés de sorte à être sensibles à la composante du champ magnétique qui est perpendiculaire à la piste magnétique pendant la lecture de la carte, les frontières des bâtonnets correspondent aux zéros de la fonction dérivée ou aux zéros de la différence en question. A contrario, lorsque les premier et deuxième capteurs sont implémentés de sorte à être sensibles à la composante du champ magnétique qui est coplanaire de la piste magnétique pendant la lecture de la carte, les frontières des bâtonnets correspondent aux extrema de la fonction dérivée ou aux extrema de la différence en question.

Dans un mode de réalisation, l'au moins une donnée est encodée selon un encodage dit « F2F » (pour « Frequency/double Frequency » en anglais) ou « Aiken Biphasé » tel que défini dans la norme ISO/IEC-7811.

L'invention concerne également au moins un programme d'ordinateur comprenant des instructions de code de programme pour la mise en œuvre d'au moins un procédé tel que décrit précédemment, selon l'un quelconque de ses différents modes de réalisation, lorsqu'il est exécuté sur un ordinateur.

Dans un autre mode de réalisation de l'invention, il est proposé un dispositif de détermination de la vitesse instantanée de défilement d'une piste magnétique lue par un système de lecture tel que décrit précédemment (selon l'un quelconque des modes de réalisation précités).

Un tel dispositif de détermination de la vitesse instantanée de défilement d'une piste magnétique est notamment apte à mettre en œuvre le procédé de détermination de la vitesse instantanée de défilement selon l'invention (selon l'un quelconque des différents modes de réalisation précités).

Ainsi, les caractéristiques et avantages de ce dispositif sont les mêmes que ceux du procédé de détermination décrit précédemment. Par conséquent, ils ne sont pas détaillés plus amplement.

Dans un autre mode de réalisation de l'invention, il est proposé un dispositif de reconnaissance d'au moins une donnée enregistrée sur une piste magnétique lue par un système de lecture selon l'invention (selon l'un quelconque des modes de réalisation précités).

Un tel dispositif de reconnaissance d'au moins une donnée enregistrée sur une piste magnétique est notamment apte à mettre en œuvre le procédé de reconnaissance d'au moins une donnée selon l'invention (selon l'un quelconque des différents modes de réalisation précités).

Ainsi, les caractéristiques et avantages de ce dispositif sont les mêmes que ceux du procédé de reconnaissance décrit précédemment. Par conséquent, ils ne sont pas détaillés plus amplement.

Dans un autre mode de réalisation de l'invention, il est proposé un terminal de paiement électronique comprenant un système de lecture selon l'invention. selon l'invention (selon l'un quelconque des différents modes de réalisation précités) et :
- un dispositif de détermination de la vitesse instantanée selon l'invention (selon l'un quelconque des différents modes de réalisation précités) ; et/ou
- un dispositif de reconnaissance de données selon l'invention (selon l'un quelconque des différents modes de réalisation précités).

Ainsi, les caractéristiques et avantages de ce terminal sont les mêmes que ceux des dispositifs décrits précédemment. Par conséquent, ils ne sont pas détaillés plus amplement.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre un lecteur de piste magnétique embarqué dans un terminal de paiement électronique selon un mode de réalisation de l'invention ;
- la figure 2 illustre des étapes d'un procédé de détermination de la vitesse instantanée de défilement d'une piste magnétique lue par le lecteur de la figure 1 selon différents modes de réalisation de l'invention ;
- la figure 3 illustre des étapes d'un procédé de reconnaissance d'au moins une donnée enregistrée sur la piste magnétique lue par le lecteur de la figure 1 selon différents modes de réalisation de l'invention ;
- les figures 4a et 4b illustrent des signaux délivrés par les premier et deuxième capteurs du lecteur de la figure 1 ainsi que des grandeurs associées à l'application des procédés des figures 2 et 3 lors de la lecture de la piste magnétique par le lecteur en question selon différents modes de réalisation de l'invention ;
- la figure 5 présente un exemple simplifié de structure d'un dispositif destiné à mettre en œuvre le procédé de détermination de la vitesse instantanée de défilement de la figure 2 ; et
- la figure 6 présente un exemple simplifié de structure d'un dispositif destiné à mettre en œuvre le procédé de reconnaissance d'au moins une donnée de la figure 3.

### 5 DESCRIPTION DETAILLEE DE L'INVENTION

Sur toutes les figures du présent document, les éléments et étapes identiques sont désignés par une même référence.

Le principe général de la technique décrite repose sur l'utilisation d'un lecteur de piste magnétique comprenant au moins un premier et un deuxième capteurs délivrant respectivement un premier signal temporel et un deuxième signal temporel proportionnels au flux du champ magnétique de la piste magnétique défilant devant les capteurs en question lors de la lecture de la piste par le lecteur. Par ailleurs, les premier et deuxième capteurs sont disposés à une distance prédéterminée *d* l'un de l'autre dans un sens de défilement de la piste lors de la lecture de la piste par le lecteur.

De la sorte, la vitesse de défilement de la piste peut être déterminée via la mise en œuvre des techniques décrites ci-dessous quelle que soit la cinématique de la piste en question lors de sa lecture (par exemple lorsque la piste change de sens de défilement pendant la lecture, ou en présence d'arrêts et de redémarrages du défilement, ou même en cas de défilement à une vitesse très lente, etc). Les données (par exemple des caractères de contrôle) enregistrées sur la piste en question peuvent ainsi être déterminées de manière améliorée quelle que soit la cinématique de la piste lors de sa lecture.

On s'attache plus particulièrement dans la suite de ce document à décrire une problématique existante dans le domaine des terminaux de paiement électronique, et plus particulièrement dans le domaine de la lecture de pistes magnétiques implémentées sur des cartes de paiement, à laquelle ont été confrontés les inventeurs de la présente demande de brevet. L'invention ne se limite bien sûr pas à ce domaine particulier d'application, mais présente un intérêt pour la lecture de pistes magnétiques implémentées sur tout type d'objet.

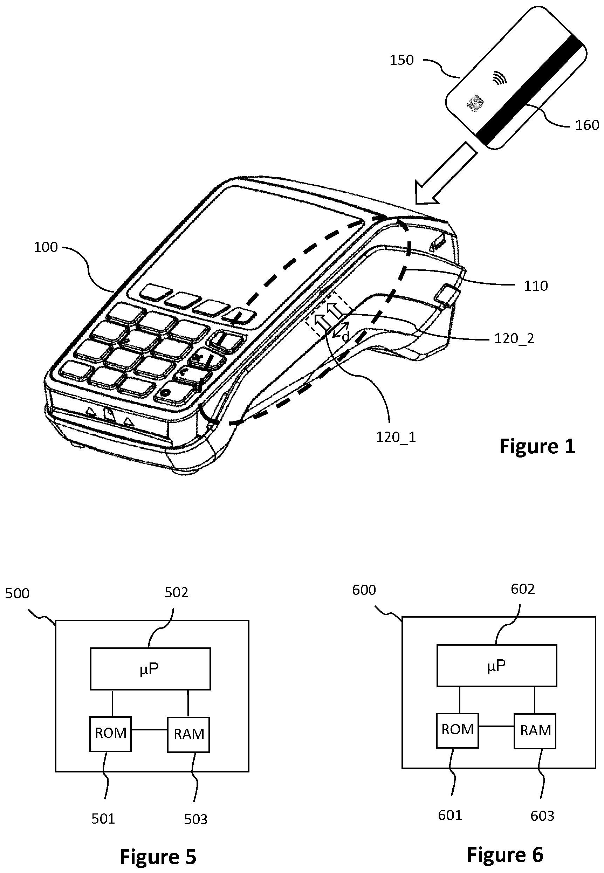

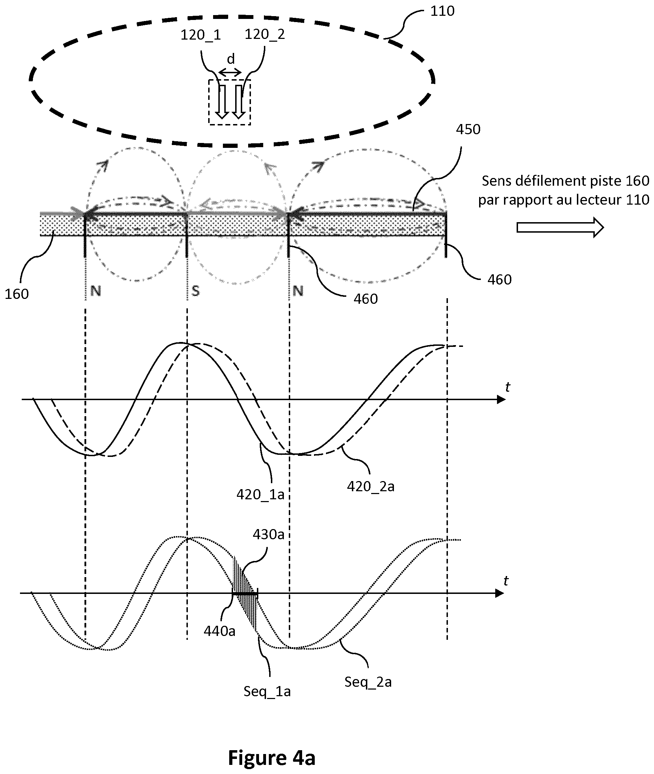

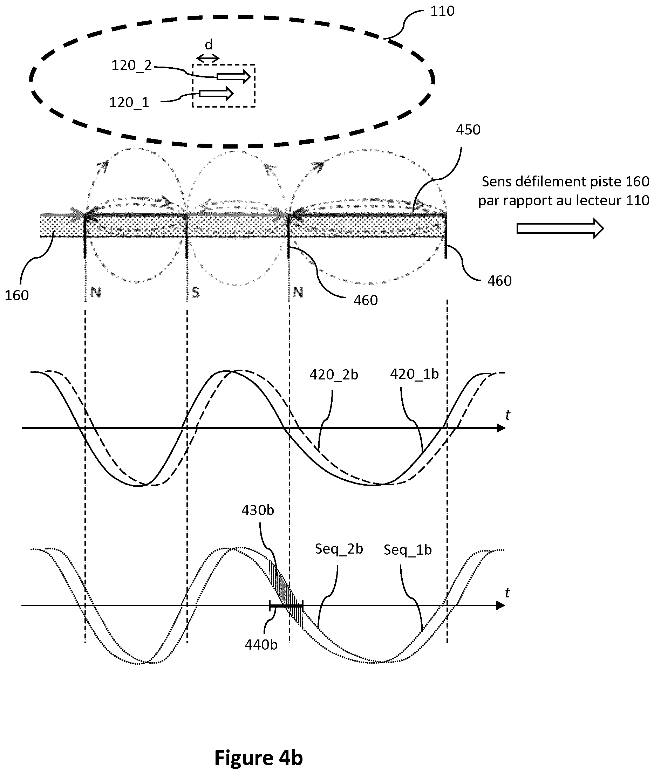

On décrit maintenant, en relation avec la **figure 1****,** un lecteur 110 de piste 160 magnétique embarqué dans un terminal 100 de paiement électronique selon un mode de réalisation de l'invention. Les **figures 4a** **et** **4b****,** illustrent deux configurations différentes des premier 120_1 et deuxième 120_2 capteurs du lecteur 110 par rapport au sens de défilement de la piste 160.

Dans le mode de réalisation illustré sur la figure 1, le lecteur 110 est plus particulièrement destiné à lire la piste magnétique 160 présente sur une carte 150 de paiement. Des données (par exemple des caractères de contrôle) sont enregistrées sur la piste 160 magnétique. De telles données permettent par exemple au terminal 100 d'identifier la carte 150 afin de conclure une transaction commerçante.

Dans d'autres modes de réalisation non illustrés, la piste magnétique est une piste présente sur un titre de transport (par exemple un ticket de bus, de métro, etc.) et le terminal électronique en question est un dispositif de contrôle présent dans un moyen de transport correspondant.

De retour à la figure 1, et en relation avec les figures 4a et 4b, le lecteur 110 comprend un premier 120_1 et un deuxième 120_2 capteurs délivrant respectivement un premier signal temporel 420_1a, 420_1b et un deuxième signal temporel 420_2a, 420_2b proportionnels au flux du champ magnétique de la piste 160 qui traverse la surface sensible des premier 120_1 et deuxième 120_2 capteurs en question lorsque la piste 160 défile devant eux lors de sa lecture par le lecteur 110. Dans des variantes, les premier 120_1 et deuxième 120_2 capteurs sont des capteurs TMR ou GMR.

Par ailleurs, les premier 120_1 et deuxième 120_2 capteurs sont disposés à une distance prédéterminée d l'un de l'autre dans un sens de défilement de la piste 160 lors de sa lecture par le lecteur 110.

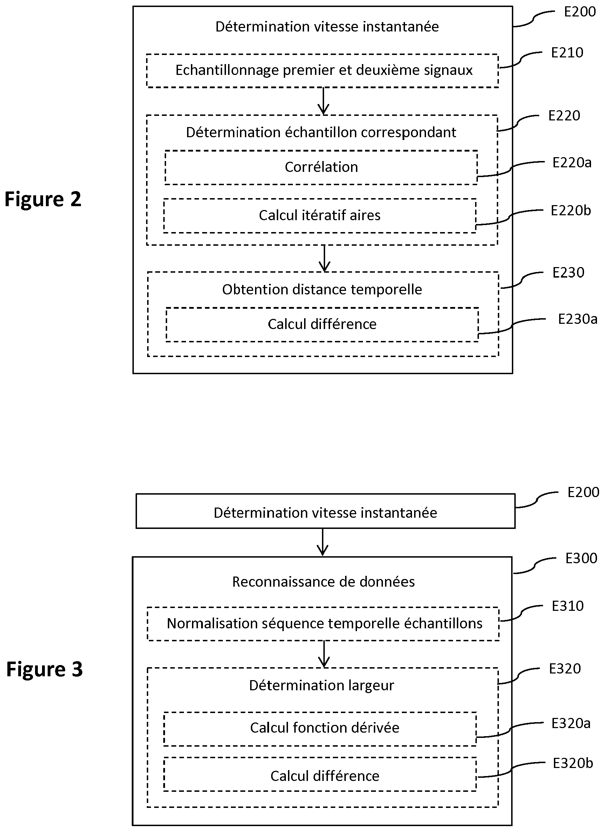

Ainsi, la connaissance de la distance prédéterminée d permet de déterminer la vitesse instantanée de défilement de la piste 160 lors de sa lecture par le terminal 100 via un traitement approprié des premier 420_1a, 420_1b et deuxième 420_2a, 420_2b signaux temporels délivrés par les premier 120_1 et deuxième 120_2 capteurs en question comme décrit ci-dessous en relation avec la figure 2.

Par ailleurs, l'utilisation de premier 120_1 et deuxième 120_2 capteurs sensibles au flux du champ magnétique les traversant en lieu et place d'un capteur sensible à la dérivée du flux en question, comme dans les lecteurs connus, permet d'obtenir des signaux temporels 420_1a, 420_1b, 420_2a, 420_2b présentant de bonnes caractéristiques (par exemple en terme d'amplitude) pour leur traitement quelle que soit la cinématique de la piste 160 lors de sa lecture (par exemple lorsque la piste change de sens de défilement pendant la lecture, ou en présence d'arrêts et de redémarrages du défilement, ou même en cas de défilement à une vitesse très lente, etc.).

De la sorte, les données enregistrées sur la piste 160 peuvent être reconnues de manière améliorée, quelle que soit la cinématique de la piste 160 lors de sa lecture, à partir de la vitesse instantanée de défilement de la piste 160 comme décrit ci-dessous en relation avec la figure 3.

Dans des variantes, les premier 120_1 et deuxième 120_2 capteurs sont intégrés sur une même puce silicium.

Ainsi, les dispersions entre les caractéristiques (statiques ou déviantes, par exemple en température) des premier 120_1 et deuxième 120_2 capteurs en question se trouvent minimisées (par exemple leurs niveaux de sensibilité au champ magnétique). De la sorte, il est possible de s'affranchir de phases de calibrage des capteurs et de compensation des dispersions en question, réduisant par là-même le coût de la solution globale. De même, dans les variantes en question, la distance prédéterminée d séparant les capteurs est particulièrement maitrisée.

Selon différentes configurations, la surface sensible des premier 120_1 et deuxième 120_2 capteurs est disposée selon différentes orientations par rapport au sens de défilement de la piste 160 lors de sa lecture. Par exemple :
- **Dans une première configuration du lecteur 110** (illustrée sur la figure 4a), la direction de sensibilité (matérialisée par les flèches symbolisant les capteurs) des premier 120_1 et deuxième 120_2 capteurs est telle qu'ils réagissent à la composante du champ magnétique qui est perpendiculaire à la piste 160 magnétique pendant sa lecture par le lecteur 110 ; et
- **Dans une deuxième configuration du lecteur 110** (illustrée sur la figure 4b), la direction de sensibilité des premier 120_1 et deuxième 120_2 capteurs est telle qu'ils réagissent à la composante du champ magnétique qui est coplanaire de la piste 160 magnétique pendant sa lecture par le lecteur 110.

De telles configurations impactent la forme d'onde des signaux temporels 420_1a, 420_1b, 420_2a, 420_2b, et donc les critères de décision à appliquer afin de reconnaître les données enregistrées sur la piste 160 comme décrit ci-dessous en relation avec la figure 3.

On décrit maintenant, en relation avec la **figure 2****,** les étapes d'un procédé de détermination de la vitesse instantanée de défilement de la piste 160 magnétique lorsqu'elle est lue par le lecteur 110 de la figure 1 selon différents modes de réalisation de l'invention. De telles étapes sont par ailleurs illustrées via les signaux représentés sur les **figures 4a** **et** **4b****.**

Un tel procédé comprend une étape de **détermination** E200 de la vitesse instantanée de défilement de la piste 160 magnétique à partir des premier 420_1a, 420_1b et deuxième 420_2a, 420_2b signaux temporels délivrés par les premier 120_1 et deuxième 120_2 capteurs, et de la distance prédéterminée d entre les premier 120_1 et deuxième 120_2 capteurs en question.

Plus particulièrement, l'étape de détermination E200 comprend une sous-étape **d'échantillonnage** E210 des premier 420_1a, 420_1b et deuxième 420_2a, 420_2b signaux temporels délivrant respectivement des première Seq_1a, Seq_1b et deuxième Seq_2a, Seq_2b séquences temporelles d'échantillons. De la sorte, les traitements appliqués par la suite se font de manière précise dans le domaine numérique.

Par ailleurs, l'étape de détermination E200 comprend, pour au moins un échantillon de la première séquence temporelle d'échantillons, dit échantillon courant, les sous-étapes suivantes :
- **détermination** E220 d'un échantillon correspondant de la deuxième séquence temporelle d'échantillons, maximisant un critère prédéterminé de correspondance avec l'échantillon courant ; et
- **obtention** E230 d'une distance temporelle séparant l'échantillon courant et l'échantillon correspondant.

Plus particulièrement, dans un **premier mode de réalisation** du procédé de détermination de la vitesse instantanée, la sous-étape de **détermination** E220 comprend une **corrélation** E220a entre les première Seq_1a, Seq_1b et deuxième Seq_2a, Seq_2b séquences temporelles d'échantillons, délivrant une fonction de corrélation. Ainsi, un maximum de la fonction de corrélation en question est représentatif d'une correspondance entre les première Seq_1a, Seq_1b et deuxième Seq_2a, Seq_2b séquences temporelles d'échantillons. L'indice temporel de l'échantillon correspondant est ainsi fonction de l'indice du maximum en question (par exemple, l'indice temporel de l'échantillon correspondant est égal à l'indice temporel de l'échantillon courant auquel on ajoute l'indice du maximum de la fonction de corrélation).

Par ailleurs, le signe de la différence entre les indices temporels de l'échantillon courant et de l'échantillon correspondant est représentatif d'un sens de défilement de la piste 160 par rapport au lecteur 110 au moment de la capture de l'échantillon courant par le premier 120_1 capteur. En effet connaissant la disposition spatiale des premier 120_1 et deuxième 120_2 capteurs, l'indication selon laquelle une donnée enregistrée sur la piste 160 est passée tout d'abord devant l'un des deux capteurs 120_1 (ou 120_2) puis seulement après devant l'autre des deux capteurs 120_2 (ou 120_1) permet de savoir dans quel sens se déplace la piste 160 lors de la lecture.

Dans un **deuxième mode de réalisation** du procédé de détermination de la vitesse instantanée, la sous-étape de **détermination** E220 comprend un **calcul itératif** E220b d'une pluralité d'aires 430a, 430b fonction d'une différence entre :
- une première somme, sur une fenêtre temporelle 440a, 440b comprenant l'échantillon courant, de premiers échantillons de la première séquence temporelle d'échantillons Seq_1a, Seq_1b ; et
- une deuxième somme, sur la fenêtre temporelle 440a, 440b, de deuxièmes échantillons de la deuxième séquence temporelle d'échantillons Seq_2a, Seq_2b décalée d'un offset temporel variable mis à jour à chaque itération du calcul en question.

En effet, de telles première et deuxième sommes sont proportionnelles respectivement à des première et deuxième aires présentes d'une part sous la courbe représentative de la première séquence temporelle d'échantillons Seq_1a, Seq_1b et d'autre part sous la courbe représentative de la deuxième séquence temporelle d'échantillons Seq_2a, Seq_2b mais décalée de l'offset temporel en question.

Une valeur de l'offset temporel correspondant à un minimum de la différence entre les première et deuxième aires est ainsi représentatif d'une correspondance entre les première Seq_1a, Seq_1b et deuxième Seq_2a, Seq_2b séquences temporelles d'échantillons. En effet, un tel minimum correspond au fait que les première Seq_1a, Seq_1b et deuxième Seq_2a, Seq_2b séquences temporelles d'échantillons ont été resynchronisées via l'application de l'offset temporel en question. L'indice temporel de l'échantillon correspondant est ainsi déduit de la valeur de l'offset temporel en question.

Par ailleurs, lorsque l'offset temporel appliqué est nul, le signe de la différence entre les première et deuxième aires (et donc de la différence entre les première et deuxième sommes) est représentatif d'un sens de défilement de la piste 160 par rapport au lecteur 110 au moment de la capture de l'échantillon courant par le premier 120_1 capteur. En effet, un tel signe permet de savoir devant lequel des deux capteurs 120_1 ou 120_2 l'échantillon courant est passé en premier lors de la lecture de la piste 160.

Dans les deux modes de réalisation précités, la sous-étape d'obtention E230 de la distance temporelle comprend un **calcul d'une différence** E230a entre les indices temporels de l'échantillon courant et de l'échantillon correspondant délivrant la distance temporelle séparant l'échantillon courant et l'échantillon correspondant.

De la sorte, la vitesse instantanée de défilement est déterminée en fonction d'une part de la distance temporelle séparant l'échantillon courant et l'échantillon correspondant, et d'autre part de la distance prédéterminée d. Par exemple, la vitesse instantanée est déterminée comme étant égale à la distance prédéterminée d divisée par la distance temporelle obtenue lors de la mise en œuvre de la sous-étape d'obtention E230.

La vitesse instantanée ainsi déterminée est par ailleurs associée à l'échantillon courant et à l'échantillon correspondant.

Ainsi, la nature des signaux délivrés par les capteurs du lecteur (capteurs sensibles au flux du champ magnétique les traversant) permet la mise en œuvre de traitements conduisant à la détermination de la vitesse instantanée en question de manière améliorée, i.e. quelle que soit la cinématique de la piste lors de sa lecture.

Une telle vitesse instantanée déterminée de manière améliorée permet par exemple de mettre en œuvre une reconnaissance améliorée de données enregistrées sur la piste 160 comme décrit ci-dessous en relation avec la figure 3.

On décrit en effet maintenant, en relation avec la **figure 3****,** les étapes d'un procédé de reconnaissance d'au moins une donnée enregistrée sur la piste 160 magnétique lue par le lecteur 110 de la figure 1 selon différents modes de réalisation de l'invention. De telles étapes sont par ailleurs illustrées via les signaux représentés sur les **figures 4a** et **4b****.**

Un tel procédé comprend les étapes suivantes :
- **détermination** E200 de la vitesse instantanée de défilement de la piste 160 par mise en œuvre du procédé de détermination de la vitesse instantanée décrit ci-dessus en relation avec la figure 2 (selon l'un quelconque de ses modes de réalisation) ; et
- **reconnaissance** E300 de l'au moins une donnée à partir d'une part de la vitesse instantanée de défilement, et d'autre part d'au moins une des première Seq_1a, Seq_1b et deuxième Seq_2a, Seq_2b séquences temporelles d'échantillons.

Ainsi, un tel procédé de reconnaissance tire bénéfice de la détermination améliorée de la vitesse instantanée de défilement de la piste via les traitements appliqués aux signaux délivrés par les premier 120_1 et deuxième 120_2 capteurs du lecteur 110 (capteurs sensibles au flux du champ magnétique les traversant). L'au moins une donnée est ainsi reconnue quelle que soit la cinématique de la piste 160 lors de sa lecture.

Par exemple, l'étape de reconnaissance E300 comprend une sous-étape de **normalisation** E310 d'au moins une des première Seq_1a, Seq_1b et deuxième Seq_2a, Seq_2b séquences temporelles d'échantillons à partir des vitesses associées aux échantillons des séquences en question. Une telle normalisation délivre au moins une séquence d'échantillons virtuels représentatifs d'une disposition spatiale d'éléments magnétiques représentant l'au moins une donnée enregistrée sur la piste.

En d'autres termes, la normalisation en question permet de faire la correspondance entre la forme d'onde temporelle des premier 420_1a, 420_1b et deuxième 420_2a, 420_2b signaux temporels (forme d'onde qui est entachée par les mouvements liés à la cinématique de passage de la piste 160 dans le lecteur 110) et la disposition physique des éléments magnétiques qui représentent les données sur la piste 160 magnétique. Une telle correspondance est possible grâce à la connaissance de la vitesse instantanée de défilement de la piste 160, déterminée lors de la mise en œuvre de l'étape de détermination E200 de la vitesse instantanée. La vitesse instantanée de défilement permet en effet de remonter jusqu'à la position physique d'un élément magnétique sur la piste 160 à partir de l'instant auquel le flux du champ magnétique correspondant a été capté par le premier 120_1 et/ou le deuxième 120_2 capteur.

De la sorte, l'au moins une donnée est reconnue à partir de l'au moins une séquence d'échantillons virtuels délivrée par la sous-étape de **normalisation** E310.

Plus particulièrement, les première Seq_1a, Seq_1b et deuxième Seq_2a, Seq_2b séquences temporelles d'échantillons contiennent *a priori* les mêmes informations, mais décalées dans le temps. De la sorte, la reconnaissance de l'au moins une donnée peut s'effectuer sur la base d'une séquence d'échantillons virtuels obtenue à partir soit de la première Seq_1a, Seq_1b séquence temporelle d'échantillons, soit de la deuxième Seq_2a, Seq_2b séquence temporelle d'échantillons.

Cependant, dans certains modes de réalisation, il peut être avantageux d'utiliser deux séquences d'échantillons virtuels obtenus respectivement à partir de la première Seq_1a, Seq_1b séquence temporelle d'échantillons et de la deuxième Seq_2a, Seq_2b séquence temporelle d'échantillons.

Par exemple, dans certains modes de réalisation, les éléments magnétiques représentant l'au moins une donnée correspondent à une pluralité de bâtonnets 450 magnétiques disposés dans un sens transverse au sens de défilement de la piste 160 lors de la lecture. Plus particulièrement, les bâtonnets 450 magnétiques se succèdent le long de la piste 160 avec des polarités magnétiques en alternance d'un bâtonnet 450 au suivant (i.e. les pôles sont inversés d'un bâtonnet 450 au suivant). L'au moins une donnée est représentée via une largeur d'au moins un bâtonnet 450 magnétique correspondant (par exemple, l'au moins une donnée est encodée selon un encodage dit « F2F » ou « Aiken Biphase » tel que défini dans la norme ISO/IEC-7811).

Dans les modes de réalisation en question, l'étape de reconnaissance E300 comprend une **détermination** E320 de l'au moins une largeur de manière à reconnaître l'au moins une donnée.

Par exemple, l'étape de détermination E320 de l'au moins une largeur met en œuvre une méthode d'estimation de frontières 460 de l'au moins un bâtonnet 450 magnétique.

Plus particulièrement, dans un **premier mode de réalisation** du procédé de reconnaissance, l'étape de normalisation E310 est appliquée soit à la première séquence temporelle d'échantillons, soit à la deuxième séquence temporelle d'échantillons et délivre une séquence d'échantillons virtuels correspondante. La méthode d'estimation de frontières 460 met en œuvre un **calcul** E320a **d'une fonction dérivée** de la séquence d'échantillons virtuels en question.

Par exemple, dans la configuration où la direction de sensibilité des premier 120_1 et deuxième 120_2 capteurs est telle qu'ils réagissent à la composante du champ magnétique qui est perpendiculaire à la piste 160 magnétique pendant sa lecture par le lecteur 110 **(première configuration précitée du lecteur 110** illustrée sur la figure 4a), les frontières 460 correspondent alors à des zéros de la fonction dérivée en question.

Dans la configuration où la direction de sensibilité premier 120_1 et deuxième 120_2 capteurs est telle qu'ils réagissent à la composante du champ magnétique qui est coplanaire de la piste 160 magnétique pendant sa lecture par le lecteur 110 **(deuxième configuration précitée du lecteur 110** illustrée sur la figure 4b), les frontières 460 correspondent alors à des extrema de la fonction dérivée en question.

Dans un **deuxième mode de réalisation** du procédé de reconnaissance, l'étape de normalisation E310 est là aussi appliquée soit à la première séquence temporelle d'échantillons, soit à la deuxième séquence temporelle d'échantillons, et délivre une séquence d'échantillons virtuels correspondante.

Cependant, dans la configuration où la direction de sensibilité des premier 120_1 et deuxième 120_2 capteurs est telle qu'ils réagissent à la composante du champ magnétique qui est perpendiculaire à la piste 160 magnétique pendant sa lecture par le lecteur 110 **(première configuration précitée du lecteur 110** illustrée sur la figure 4a), les frontières 460 estimées à l'étape de détermination E320 correspondent à des extrema (maximum ou minimum) de la séquence d'échantillons virtuels en question.

Dans la configuration où la direction de sensibilité premier 120_1 et deuxième 120_2 capteurs est telle qu'ils réagissent à la composante du champ magnétique qui est coplanaire de la piste 160 magnétique pendant sa lecture par le lecteur 110 **(deuxième configuration précitée du lecteur 110** illustrée sur la figure 4b), les frontières 460 estimées à l'étape de détermination E320 correspondent à des passages par zéro de la séquence d'échantillons virtuels en question.

Dans un **troisième mode de réalisation** du procédé de reconnaissance, l'étape de normalisation E310 est appliquée à la fois à la première séquence temporelle d'échantillons et à la deuxième séquence temporelle d'échantillons de manière à délivrer des première et deuxième séquences d'échantillons virtuels correspondantes. La méthode d'estimation de frontières 460 met en œuvre un **calcul** E320b **d'une différence** entre les première et deuxième séquences d'échantillons virtuels.

Dans la configuration où la direction de sensibilité des premier 120_1 et deuxième 120_2 capteurs est telle qu'ils réagissent à la composante du champ magnétique qui est perpendiculaire à la piste 160 magnétique pendant sa lecture par le lecteur 110 **(première configuration précitée du lecteur 110** illustrée sur la figure 4a), les frontières 460 correspondent alors à des zéros de la différence en question.

Dans la configuration où la direction de sensibilité des premier 120_1 et deuxième 120_2 capteurs est telle qu'ils réagissent à la composante du champ magnétique qui est coplanaire de la piste 160 magnétique pendant sa lecture par le lecteur 110 **(deuxième configuration précitée du lecteur 110** illustrée sur la figure 4b), les frontières 460 correspondent alors à des extrema de la différence en question.

Selon les différents modes de réalisation, la solution proposée permet donc la reconnaissance d'au moins une donnée enregistrée sur une piste magnétique lue par un lecteur magnétique tel que décrit précédemment.

La **figure 5** présente un exemple de structure d'un dispositif 500 de détermination de la vitesse instantanée de défilement de la piste 160 magnétique lorsqu'elle est lue par le lecteur 110 (selon l'un quelconque de ses modes de réalisation précité).

Plus particulièrement, un tel dispositif 500 permet la mise en œuvre du procédé de détermination de la vitesse instantanée de la figure 2, dans l'un quelconque des différents modes de réalisation. Le dispositif 500 comprend une mémoire vive 503 (par exemple une mémoire RAM), une unité de traitement 502 équipée par exemple d'un processeur, et pilotée par un programme d'ordinateur stocké dans une mémoire morte 501 (par exemple une mémoire ROM ou un disque dur). A l'initialisation, les instructions de code du programme d'ordinateur sont par exemple chargées dans la mémoire vive 503 avant d'être exécutées par le processeur de l'unité de traitement 502.

Cette figure 5 illustre seulement une manière particulière, parmi plusieurs possibles, de réaliser les moyens compris dans le dispositif 500, afin qu'il effectue certaines étapes du procédé de détermination de la vitesse instantanée détaillé ci-dessus, en relation avec la figure 2 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le dispositif 500 sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

La **figure 6** présente un exemple de structure d'un dispositif 600 de reconnaissance d'au moins une donnée enregistrée sur une piste 160 magnétique lorsqu'elle est lue par le lecteur 110 (selon l'un quelconque de ses modes de réalisation précité).

Plus particulièrement, un tel dispositif 600 permet la mise en œuvre du procédé de reconnaissance d'au moins une donnée de la figure 3, dans l'un quelconque des différents modes de réalisation. Le dispositif 600 comprend une mémoire vive 603 (par exemple une mémoire RAM), une unité de traitement 602 équipée par exemple d'un processeur, et pilotée par un programme d'ordinateur stocké dans une mémoire morte 601 (par exemple une mémoire ROM ou un disque dur). A l'initialisation, les instructions de code du programme d'ordinateur sont par exemple chargées dans la mémoire vive 603 avant d'être exécutées par le processeur de l'unité de traitement 602.

Cette figure 6 illustre seulement une manière particulière, parmi plusieurs possibles, de réaliser les moyens compris dans le dispositif 600, afin qu'il effectue certaines étapes du procédé de reconnaissance d'au moins une donnée détaillé ci-dessus, en relation avec la figure 3 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens compris dans le dispositif 600 sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Il apparaît ainsi que le dispositif 600 comprend les moyens du dispositif 500, le procédé de reconnaissance d'au moins une donnée de la figure 3 comprenant les étapes du procédé de détermination de la vitesse instantanée de la figure 2.

Ainsi, dans certains modes de réalisation, le terminal 100 comprend soit uniquement le dispositif 600, soit uniquement le dispositif 500 (par exemple lorsqu'un autre dispositif préexistant du terminal 100 met en œuvre un procédé connu de reconnaissance de données à partir de la vitesse instantanée de défilement qui est fournie par le dispositif 500). Dans d'autres modes de réalisation, le terminal 100 comprend à la fois le dispositif 600 et le dispositif 500 afin par exemple de pouvoir mettre en œuvre différentes méthodes (connues ou selon l'invention) de reconnaissance de données à partir de la vitesse instantanée de défilement fournie par le dispositif 500.

## Revendications

1. Système de lecture de piste (160) magnétique,
**caractérisé en ce qu'il** comprend :
- un lecteur (110) de piste magnétique comprenant au moins un premier (120_1) et un deuxième (120_2) capteurs délivrant respectivement un premier signal temporel (420_1a, 420_1b) et un deuxième signal temporel (420_2a, 420_2b) proportionnels à un flux d'un champ magnétique de ladite piste (160) magnétique défilant devant lesdits premier et deuxième capteurs lors de la lecture de la piste par le lecteur, lesdits premier et deuxième capteurs étant disposés à une distance prédéterminée (d) l'un de l'autre dans un sens de défilement de ladite piste lors de ladite lecture ;
- des moyens de détermination d'une vitesse instantanée de défilement de ladite piste magnétique à partir desdits premier (420_1a, 420_1b) et deuxième (420_2a, 420_2b) signaux temporels et de ladite distance prédéterminée (d).

2. Système selon la revendication 1 dans lequel les premier et deuxième capteurs appartiennent au groupe comprenant :
- un capteur TMR (pour « Tunneling Magnetic Résistance » en anglais) ; et
- un capteur GMR (pour « Giant Magnetic Résistance » en anglais).

3. Système selon la revendication 1 ou 2 dans lequel les premier et deuxième capteurs sont intégrés sur une même puce silicium.

4. Procédé de détermination de la vitesse instantanée de défilement d'une piste (160) magnétique lue par un système de lecture selon l'une quelconque des revendications 1 à 3,
**caractérisé en ce qu'il** comprend une étape de **détermination** (E200) de la vitesse instantanée de défilement de ladite piste magnétique à partir desdits premier (420_1a, 420_1b) et deuxième (420_2a, 420_2b) signaux temporels et de ladite distance prédéterminée (d) entre lesdits premier (120_1) et deuxième (120_2) capteurs.

5. Procédé de détermination selon la revendication 4,
**caractérisé en ce que** ladite étape de détermination (E200) de la vitesse instantanée de défilement comprend :
- un **échantillonnage** (E210) desdits premier (420_1a, 420_1b) et deuxième (420_2a, 420_2b) signaux temporels délivrant respectivement des première (Seq_1a, Seq_1b) et deuxième (Seq_2a, Seq_2b) séquences temporelles d'échantillons, et, pour au moins un échantillon de ladite première séquence temporelle d'échantillons, dit échantillon courant :
- une **détermination** (E220) d'un échantillon correspondant de ladite deuxième séquence temporelle d'échantillons, maximisant un critère prédéterminé de correspondance avec ledit échantillon courant ; et
- une **obtention** (E230) d'une distance temporelle séparant ledit échantillon courant et ledit échantillon correspondant,
ladite vitesse instantanée de défilement étant déterminée en fonction de ladite distance temporelle séparant ledit échantillon courant et ledit échantillon correspondant et de ladite distance prédéterminée (d),
ladite vitesse instantanée de défilement étant associée audit échantillon courant et audit échantillon correspondant.

6. Procédé de détermination selon la revendication 5 dans lequel ladite étape de détermination (E220) dudit échantillon correspondant comprend une **corrélation** (E220a) entre lesdites première (Seq_1a, Seq_1b) et deuxième (Seq_2a, Seq_2b) séquences temporelles d'échantillons, délivrant une fonction de corrélation,
un indice temporel dudit échantillon correspondant étant fonction d'un indice d'un maximum de ladite fonction de corrélation,
et dans lequel ladite étape d'obtention (E230) de ladite distance temporelle comprend un **calcul d'une différence** (E230a) entre les indices temporels dudit échantillon courant et dudit échantillon correspondant.

7. Procédé de détermination selon la revendication 5 dans lequel ladite étape de détermination (E220) dudit échantillon correspondant comprend un **calcul itératif** (E220b) d'une pluralité d'aires (430a, 430b) fonction d'une différence entre :
- une première somme, sur une fenêtre temporelle (440a, 440b) comprenant ledit échantillon courant, de premiers échantillons de ladite première séquence temporelle d'échantillons (Seq_1a, Seq_1b) ; et
- une deuxième somme, sur ladite fenêtre temporelle, de deuxièmes échantillons de ladite deuxième séquence temporelle d'échantillons (Seq_2a, Seq_2b) décalée d'un offset temporel variable mis à jour à chaque itération dudit calcul,
un indice temporel dudit échantillon correspondant étant fonction d'une valeur dudit offset temporel correspondant à une aire minimale parmi ladite pluralité d'aires,
et dans lequel ladite étape d'obtention (E230) de ladite distance temporelle comprend un **calcul d'une différence** (E230a) entre les indices temporels dudit échantillon courant et dudit échantillon correspondant.

8. Procédé de reconnaissance d'au moins une donnée enregistrée sur une piste magnétique lue par un système de lecture selon l'une quelconque des revendications 1 à 3,
**caractérisé en ce qu'il** comprend les étapes suivantes :
- **détermination** (E200) de la vitesse instantanée de défilement de la piste par mise en œuvre du procédé de détermination de la vitesse instantanée selon l'une quelconque des revendications 5 à 7 ; et
- **reconnaissance** (E300) de ladite au moins une donnée à partir de ladite vitesse instantanée de défilement et d'au moins une desdites première (Seq_1a, Seq_1b) et deuxième (Seq_2a, Seq_2b) séquences temporelles d'échantillons.

9. Procédé de reconnaissance selon la revendication 8 dans lequel ladite étape de reconnaissance (E300) comprend une **normalisation** (E310) d'au moins une desdites première (Seq_1a, Seq_1b) et deuxième (Seq_2a, Seq_2b) séquences temporelles d'échantillons à partir des vitesses associées aux échantillons desdites séquences, ladite normalisation délivrant au moins une séquence d'échantillons virtuels représentatifs d'une disposition spatiale d'éléments magnétiques représentant ladite au moins une donnée sur la piste,
ladite au moins une donnée étant reconnue à partir de ladite au moins une séquence d'échantillons virtuels.

10. Procédé de reconnaissance selon la revendication 9 dans lequel lesdits éléments magnétiques correspondent à une pluralité de bâtonnets (450) magnétiques disposés dans un sens transverse au sens de défilement de la piste lors de la lecture,
lesdits bâtonnets magnétiques se succédant le long de la piste avec des polarités magnétiques en alternance d'un bâtonnet au suivant,
ladite au moins une donnée étant représentée via une largeur d'au moins un bâtonnet magnétique correspondant,
ladite étape de reconnaissance (E300) comprenant une **détermination** (E320) de ladite au moins une largeur,
ladite au moins une donnée étant reconnue à partir de ladite au moins une largeur.

11. Procédé de reconnaissance selon la revendication 10 dans lequel ladite étape de détermination (E320) de ladite au moins une largeur met en œuvre une méthode d'estimation de frontières (460) dudit au moins un bâtonnet magnétique correspondant appartenant au groupe comprenant :
- un **calcul** (E320a) **d'une fonction dérivée** de ladite au moins une séquence d'échantillons virtuels, lesdites frontières correspondant à des zéros ou à des extrema de ladite fonction dérivée ; et
- un **calcul** (E320b) **d'une différence** entre lesdites première et deuxième séquences d'échantillons virtuels, lesdites frontières correspondant à des zéros ou à des extrema de ladite différence, lorsque ladite étape de normalisation (E310) appliquée audites première et deuxième séquences temporelles d'échantillons délivre des première et deuxième séquences d'échantillons virtuels correspondantes.

12. Produit programme d'ordinateur comprenant des instructions de code de programme pour la mise en œuvre d'un procédé selon l'une quelconque des revendications 4 à 11, lorsque ledit programme est exécuté par un processeur.

13. Dispositif (500) de détermination de la vitesse instantanée de défilement d'une piste (160) magnétique lue par un système de lecture selon l'une quelconque des revendications 1 à 3,
**caractérisé en ce qu'il** comprend une machine de calcul reprogrammable (502) ou une machine de calcul dédiée configurée pour déterminer la vitesse instantanée de défilement de ladite piste magnétique à partir desdits premier (420_1a, 420_1b) et deuxième (420_2a, 420_2b) signaux temporels et de ladite distance prédéterminée (d) entre lesdits premier (120_1) et deuxième (120_2) capteurs.

14. Dispositif (600) de reconnaissance d'au moins une donnée enregistrée sur une piste magnétique lue par un système de lecture selon l'une quelconque des revendications 1 à 3,
**caractérisé en ce qu'il** comprend une machine de calcul reprogrammable (502) ou une machine de calcul dédiée configurée pour :
- échantillonner lesdits premier (420_1a, 420_1b) et deuxième (420_2a, 420_2b) signaux temporels délivrant respectivement des première (Seq_1a, Seq_1b) et deuxième (Seq_2a, Seq_2b) séquences temporelles d'échantillons, et, pour au moins un échantillon de ladite première séquence temporelle d'échantillons, dit échantillon courant :
- déterminer un échantillon correspondant de ladite deuxième séquence temporelle d'échantillons, maximisant un critère prédéterminé de correspondance avec ledit échantillon courant ; et
- obtenir une distance temporelle séparant ledit échantillon courant et ledit échantillon correspondant,
- déterminer la vitesse instantanée de défilement de ladite piste magnétique en fonction de ladite distance temporelle séparant ledit échantillon courant et ledit échantillon correspondant et de ladite distance prédéterminée (d), ladite vitesse instantanée de défilement étant associée audit échantillon courant et audit échantillon correspondant ;
- reconnaitre ladite au moins une donnée à partir de ladite vitesse instantanée de défilement et d'au moins une desdites première (Seq_1a, Seq_1b) et deuxième (Seq_2a, Seq_2b) séquences temporelles d'échantillons.

15. Terminal (100) de paiement électronique comprenant un système de lecture selon la revendication 1 ou 2 et :
- un dispositif (500) de détermination de la vitesse instantanée selon la revendication 13 ; et/ou
- un dispositif (600) de reconnaissance de données selon la revendication 14.

## Patentansprüche

1. Magnetstreifenlesesystem (160),
**dadurch gekennzeichnet, dass** es umfasst:
- einen Magnetstreifenleser (110), umfassend mindestens einen ersten (120 1) und einen zweiten (120_2) Sensor, die ein erstes Zeitsignal (420_1a, 420_1b) bzw. ein zweites Zeitsignal (420_2a, 420_2b) liefern, die zu einem Fluss eines Magnetfeldes des Magnetstreifens (160), der vor den ersten und zweiten Sensoren beim Lesen des Streifens durch den Leser abläuft, proportional sind, wobei die ersten und zweiten Sensoren in einem vorbestimmten Abstand (d) zueinander in eine Ablaufrichtung des Streifens beim Lesen angeordnet sind;
- Mittel zur Bestimmung einer momentanen Ablaufgeschwindigkeit des Magnetstreifens auf Basis der ersten (420_1a, 420_1b) und zweiten (420_2a, 420_2b) Zeitsignale und des vorbestimmten Abstands (d).

2. System nach Anspruch 1, bei dem die ersten Sensoren der Gruppe angehören, umfassend:
- einen TMR-Sensor (für "Tunneling Magnetic Resistance" auf Englisch); und
- einen GMR-Sensor (für "Giant Magnetic Resistance" auf Englisch).

3. System nach Anspruch 1 oder 2, bei dem die ersten und zweiten Sensoren auf einem selben Silizium-Chip integriert sind.

4. Verfahren zur Bestimmung der momentanen Ablaufgeschwindigkeit eines Magnetstreifens (160), der von einem Lesesystem nach einem der Ansprüche 1 bis 3 gelesen wird,
**dadurch gekennzeichnet, dass** es einen Schritt der Bestimmung (E200) der momentanen Ablaufgeschwindigkeit des Magnetstreifens auf Basis der ersten (420_1a, 420_lb) und zweiten (420_2a, 420_2b) Zeitsignale und des vorbestimmten Abstands (d) zwischen den ersten (120_1) und zweiten (120_2) Sensoren umfasst.

5. Bestimmungsverfahren nach Anspruch 4,
**dadurch gekennzeichnet, dass** der Schritt der Bestimmung (E200) der momentanen Ablaufgeschwindigkeit umfasst:
- eine Bemusterung (E210) der ersten (420_1a, 420_1b) und zweiten (420_2a, 420_2b) Zeitsignale, das erste (Seq_1a, Seq_1b) bzw. zweite (Seq_2a, Seq_2b) Zeitsequenzen von Mustern und für mindestens ein Muster der ersten Musterzeitsequenz, laufendes Muster genannt, liefert;
- eine Bestimmung (E220) eines Musters entsprechend der zweiten Musterzeitsequenz, die ein vorbestimmtes Entsprechungskriterium mit dem laufenden Muster maximiert; und
- eine Gewinnung (E230) eines Zeitabstands zwischen dem laufenden Muster und dem entsprechenden Muster,
wobei die momentane Ablaufgeschwindigkeit in Abhängigkeit von dem Zeitabstand zwischen dem laufenden Muster und dem entsprechenden Muster und von dem vorbestimmten Abstand (d) bestimmt wird,
wobei die momentane Ablaufgeschwindigkeit dem laufenden Muster und dem entsprechenden Muster zugeordnet wird.

6. Bestimmungsverfahren nach Anspruch 5, bei dem der Schritt der Bestimmung (E220) des entsprechenden Musters eine Korrelation (E220a) zwischen den ersten (Seq_1a, Seq_1b) und zweiten (Seq_2a, Seq_2b) Musterzeitsequenzen umfasst, die eine Korrelationsfunktion liefert,
wobei ein Zeitindex des entsprechenden Musters von einem Index eines Maximums der Korrelationsfunktion abhängt,
und bei dem der Schritt der Gewinnung (E230) des Zeitabstands eine Berechnung einer Differenz (E230a) zwischen den Zeitindizes des laufenden Musters und des entsprechenden Musters umfasst.

7. Bestimmungsverfahren nach Anspruch 5, bei dem der Schritt der Bestimmung (E220) des entsprechenden Musters eine iterative Berechnung (E220b) einer Vielzahl von Bereichen (430a, 430b) umfasst, abhängig von einer Differenz zwischen:
- einer ersten Summe in einem Zeitfenster (440a, 440b), umfassend das laufende Muster, von ersten Mustern der ersten Musterzeitsequenz (Seq_1a, Seq_1b); und
- einer zweiten Summe in dem Zeitfenster von zweiten Mustern der zweiten Musterzeitsequenz (Seq_2a, Seq_2b), versetzt um einen variablen Zeitversatz, der bei jeder Iteration der Berechnung aktualisiert wird,
wobei ein Zeitindex des entsprechenden Musters von einem Wert des Zeitversatzes entsprechend einem Mindestbereich unter der Vielzahl von Bereichen abhängt,
und bei dem der Schritt der Gewinnung (E230) des Zeitabstands eine Berechnung einer Differenz (E230a) zwischen den Zeitindizes des laufenden Musters und des entsprechenden Musters umfasst.

8. Verfahren zur Erkennung mindestens eines Datums, auf einem Magnetstreifen gespeichert ist, der von einem Lesesystem nach einem der Ansprüche 1 bis 3 gelesen wird,
**dadurch gekennzeichnet, dass** es die folgenden Schritte umfasst:
- Bestimmung (E200) der momentanen Ablaufgeschwindigkeit des Streifens durch Einsatz des Verfahrens zur Bestimmung der momentanen Geschwindigkeit nach einem der Ansprüche 5 bis 7; und
- Erkennung (E300) des mindestens einen Datums auf Basis der momentanen Ablaufgeschwindigkeit und mindestens einer der ersten (Seq_1a, Seq_1b) und zweiten (Seq_2a, Seq_2b) Musterzeitsequenzen.

9. Erkennungsverfahren nach Anspruch 8, bei dem der Erkennungsschritt (E300) einen Normung (E310) mindestens einer der ersten (Seq_1a, Seq_1b) und zweiten (Seq_2a, Seq_2b) Musterzeitsequenzen auf Basis der den Mustern der Sequenzen zugeordneten Geschwindigkeiten umfasst, wobei die Normung mindestens eine Sequenz von virtuellen Mustern liefert, die für eine räumliche Anordnung von Magnetelementen repräsentativ sind, die das mindestens eine Datum auf dem Streifen darstellen,
wobei das mindestens eine Datum auf Basis der mindestens einen Sequenz von virtuellen Mustern erkannt wird.

10. Erkennungsverfahren nach Anspruch 9, bei dem die Magnetelemente einer Vielzahl von Magnetbalken (450) entsprechen, die in eine Richtung quer zur Ablaufrichtung des Streifens beim Lesen angeordnet sind,
wobei die Magnetbalken entlang des Streifens mit alternierenden Magnetpolaritäten von einem Balken zum nächsten aufeinander folgen,
wobei das mindestens eine Datum über eine Breite von mindestens einem entsprechenden Magnetbalken dargestellt wird,
wobei der Erkennungsschritt (E300) eine Bestimmung (E320) der mindestens einen Breite umfasst,
wobei das mindestens eine Darum auf Basis der mindestens einen Breite erkannt wird.

11. Erkennungsverfahren nach Anspruch 10, bei dem der Schritt der Bestimmung (E320) der mindestens einen Breite eine Methode der Schätzung von Grenzen (460) des mindestens einen entsprechenden Magnetbalkens einsetzt, die der Gruppe angehört, umfassend:
- eine Berechnung (E320a) einer abgeleiteten Funktion der mindestens einen Sequenz von virtuellen Mustern, wobei die Grenzen Nullen oder Extrema der abgeleiteten Funktion entsprechen; und
- eine Berechnung (E320b) einer Differenz zwischen den ersten und zweiten Sequenzen von virtuellen Mustern, wobei die Grenzen Nullen oder Extrema der Differenz entsprechen, wenn der Normungsschritt (E310), der an den ersten und zweiten Musterzeitsequenzen angewandt wird, erste und zweite entsprechende Sequenzen von virtuellen Mustern liefert.

12. Computerprogrammprodukt, umfassend Programmcodebefehle für den Einsatz eines Verfahrens nach einem der Ansprüche 4 bis 11, wenn das Programm von einem Prozessor ausgeführt wird.

13. Vorrichtung (500) zur Bestimmung der momentanen Ablaufgeschwindigkeit eines Magnetstreifens (160), der von einem Lesesystem nach einem der Ansprüche 1 bis 3 gelesen wird,
**dadurch gekennzeichnet, dass** sie eine umprogrammierbare Rechenmaschine (502) oder eine spezielle Rechenmaschine umfasst, die konfiguriert ist, um die momentane Ablaufgeschwindigkeit des Magnetstreifens auf Basis der ersten (420_1a, 420_1b) und zweiten (420_2a, 420_2b) Zeitsingale und des vorbestimmten Abstands (d) zwischen den ersten (120_1) und zweiten (120_2) Sensoren zu bestimmen.

14. Vorrichtung (600) zur Erkennung mindestens eines Datums, das auf einem Magnetstreifen gespeichert ist, der von einem Lesesystem nach einem der Ansprüche 1 bis 3 gelesen wird,
**dadurch gekennzeichnet, dass** sie eine umprogrammierbare Rechenmaschine (502) oder eine spezielle Rechenmaschine umfasst, die konfiguriert ist, um:
- die ersten (420_1a, 420_1b) und zweiten (420_2a, 420_2b) Zeitsignale zu bemustern, wobei erste (Seq_1a, Seq_1b) bzw. zweite (Seq_2a, Seq_2b) Zeitsequenzen von Mustern und für mindestens ein Muster der ersten Musterzeitsequenz, laufendes Muster genannt, geliefert werden;
- ein Muster entsprechend der zweiten Musterzeitsequenz, die ein vorbestimmtes Entsprechungskriterium mit dem laufenden Muster maximiert, zu bestimmen;
- einen Zeitabstand zwischen dem laufenden Muster und dem entsprechenden Muster zu gewinnen;
- die momentane Ablaufgeschwindigkeit des Magnetstreifens in Abhängigkeit von dem Zeitabstand zwischen dem laufenden Muster und dem entsprechenden Muster und dem vorbestimmten Abstand (d) zu bestimmen, wobei die momentane Ablaufgeschwindigkeit dem laufenden Muster und dem entsprechenden Muster zugeordnet wird;
- das mindestens eine Datum auf Basis der momentanen Ablaufgeschwindigkeit und mindestens einer der ersten (Seq_1a, Seq_1b) und zweiten (Seq_2a, Seq_2b) Musterzeitsequenzen zu erkennen.

15. Elektronisches Zahlungsterminal (100), umfassend ein Lesesystem nach Anspruch 1 oder 2 und:
- eine Vorrichtung (500) zur Bestimmung der momentanen Geschwindigkeit nach Anspruch 13; und/oder
- eine Vorrichtung (600) zur Erkennung von Daten nach Anspruch 14.

## Claims

1. Magnetic stripe (160) reading system **characterized in that** it comprises:
- a magnetic stripe reader (110) comprising at least one first sensor (120_1) and one second sensor (120_2) respectively delivering a first temporal signal (420_1a, 420_1b) and a second temporal signal (420_2a, 420_2b) proportional to a flux of a magnetic field of said magnetic stripe (160) traveling before said first and second sensors during the reading of the stripe by the reader, said first and second sensors being disposed at a pre-determined distance (d) from each other in a sense of travel of the stripe during said reading;
- means for determining an instantaneous speed of travel of said magnetic stripe from said first (420_1a, 420_1b) and second (420_2a, 420_2b) temporal signals and said pre-determined distance (d).

2. System according to claim 1 wherein the first and second sensors belong to the group comprising:
- a TMR (Tunneling Magnetic Resistance) sensor; and
- a GMR (Giant Magnetic Resistance) sensor.

3. System according to claim 1 or 2 wherein the first and second sensors are integrated into one and the same silicon chip.

4. Method for determining the instantaneous speed of travel of a magnetic stripe (160) read by a reading system according to any one of the claims 1 to 3,
**characterized in that** it comprises **determining** (E200) the instantaneous speed of travel of said magnetic stripe from said first (420_2a, 420_1b) and second (420_2a, 420_2b) temporal signals and from said pre-determined distance (d) between said first (120_1) and second (120_2) sensors.

5. Method for determining according to claim 4,
**characterized in that** said determining (E200) the instantaneous speed of travel comprises:
- **sampling** (E210) said first (420_1a, 420_1b) and second (420_2a, 420_2b) temporal signals respectively delivering first (Seq_1a, Seq_1b) and second (Seq_2a, Seq_2b) temporal sequences of samples and, for at least one sample of said first temporal sequence of samples, called a current sample:
- **determining** (E220) a corresponding sample of said second temporal sequence of samples, maximizing a pre-determined criterion of correspondence with said current sample; and
- **obtaining** (E230) a temporal distance between the current sample and the corresponding sample,
said instantaneous speed of travel being determined as a function of said temporal distance between the current sample and said corresponding sample and of said pre-determined distance (d),
said instantaneous speed of travel being associated with said current sample and with said corresponding sample.

6. Method for determining according to claim 5 wherein said determining (E220) said corresponding sample comprises a **correlation** between said first (420_1a, 420_1b) and second (420_1a, 420_2b) temporal sequences of samples, delivering a correlation function,
a temporal index of the corresponding sample being a function of an index of a maximum of said correlation function,
and wherein said obtaining (E230) said temporal distance comprises a **computation of a difference** (E230a) between the temporal indices of the current sample and of said corresponding sample.

7. Method for determining according to claim 5 wherein said determining (E220) said corresponding sample comprises **an iterative computation** (E220b) of a plurality of areas (430a, 430b) as a function of a difference between:
- a first sum on a temporal window (430a, 430b) comprising said current sample, of first samples of said first temporal sequence of samples (Seq_1a, Seq_1b); and
- a second sum, on said temporal window, of second samples of said second temporal sequence of samples (Seq_2a, Seq_2b) offset by a variable temporal offset updated at each iteration of the computation,
a temporal index of said corresponding sample being a function of a value of said temporal offset corresponding to a minimum area among said plurality of areas,
and wherein said obtaining (E230) said temporal distance comprises **a computation of a difference** (E230a) between the temporal indices of said current sample and of said corresponding sample.

8. Method for recognizing at least one piece of data recorded on a magnetic stripe read by a reading system according to any one of the claims 1 to 3,
**characterized in that** it comprises the following acts:
- **determining** (E00) the instantaneous speed of travel of the stripe by implementing the method for determining the instantaneous speed according to any one of the claims 5 to 7; and
- **recognizing** (E300) said at least one piece of data from said instantaneous speed of travel and from at least one of said first (Seq_1a, Seq_1b) and second (Seq_2a, Seq_2b) temporal sequences of samples.

9. Method for recognizing according to claim 8 wherein said recognizing (E300) comprises a normalization (E310) of at least one of said first (Seq_1a, Seq_1b) and second (Seq_1a, Seq_2b) temporal sequences of samples from speeds associated with the samples of said sequences, said normalization delivering at least one sequence of virtual samples representing a spatial disposition of magnetic elements representing said at least one piece of data on the stripe,
said at least one piece of data being recognized from said at least one sequence of virtual samples.

10. Method for recognizing according to claim 9 wherein said magnetic elements correspond to a plurality of magnetic strips (450) disposed in a sense crosswise to the sense of travel of the stripe during the reading,
said magnetic strips succeeding one another along the stripe with magnetic polarities alternating from one strip to the next,
said at least one piece of data being represented via a width of at least one corresponding magnetic strip,
said recognizing (E300) comprising a determining (E320) of said at least one width,
said at least one piece of data being recognized from said at least one width.

11. Method for recognizing according to claim 10 wherein said determining (E320) said at least one width implements a method for estimating boundaries (460) of said at least one corresponding magnetic strip, belonging to the group comprising:
- **a computation (E320a) of a derivative function** of said at said least one sequence of virtual samples, said boundaries corresponding to zeros or to extrema of said derivative function; and
- **a computation (E320b) of a difference** between said first and second sequences of virtual samples, said boundaries corresponding to zeros or to extrema of said difference, when said normalization (E310) applied to said first and second temporal sequences of samples delivers first and second corresponding sequences of virtual samples.

12. Computer program comprising program code instructions for the implementing of a method according to any one of the claims 4 to 11, when said program is executed by a processor.

13. Device for determining the instantaneous speed of travel of a magnetic stripe (160) read by a reading system according to any one of the claims 1 to 3,
**characterized in that** it comprises a reprogrammable computation machine (502) or a dedicated computation machine configured to determine the instantaneous speed of travel of said magnetic stripe from said first (420_2a, 420_1b) and second (420_2a, 420_2b) temporal signals and from said pre-determined distance (d) between said first (120_1) and second (120_2) sensors.

14. Device (600) for recognizing at least one piece of data recorded on a magnetic stripe read by a reading system according to any one of the claims 1 to 3,
**characterized in that** it comprises a reprogrammable computation machine (502) or a dedicated computation machine configured to:
- **sample** (E210) said first (420_1a, 420_1b) and second (420_2a, 420_2b) temporal signals respectively delivering first (Seq_1a, Seq_1b) and second (Seq_2a, Seq_2b) temporal sequences of samples and, for at least one sample of said first temporal sequence of samples, called a current sample:
- **determine** a corresponding sample of said second temporal sequence of samples, maximizing a pre-determined criterion of correspondence with said current sample; and
- **obtain** a temporal distance between the current sample and the corresponding sample,
- **determine** the instantaneous speed of travel of said magnetic stripe as a function of said temporal distance between the current sample and said corresponding sample and of said pre-determined distance (d), said instantaneous speed of travel being associated with said current sample and with said corresponding sample;
- **recognize** said at least one piece of data from said instantaneous speed of travel and from at least one of said first (Seq_1a, Seq_1b) and second (Seq_2a, Seq_2b) temporal sequences of samples.

15. Electronic payment terminal (100) comprising a reading system according to claim 1 or 2 and:
- a device (500) for determining the instantaneous speed according to claim 13; and/or
- a device (600) for recognizing data according to claim 14.
